# EUROPEAN PATENT APPLICATION

(11) **EP 2 624 176 A1**
(43) Date of publication of application: **07.08.2013**
(21) Application number: 11828095.7
(22) Date of filing: 26.09.2011
(51) Int. Cl.: G06K 19/07

(54) **MENU ASSEMBLY METHOD, MENU ASSEMBLY SYSTEM AND TERMINAL**

(30) Priority: 28.09.2010 CN 201010295763
(71) Applicant: Beijing Watchdata System Co. Ltd., Chaoyang District, Beijing 100015 (CN)
(72) Inventor: SHANG, Jianqiang, Beijing 100015 (CN); JIA, Zhenbo, Beijing 100015 (CN); LI, Ming, Beijing 100015 (CN)
(74) Representative: Hards, Andrew
(86) International application number: PCT/CN2011/080168
(87) International publication number: WO 2012/041199

(57) **Abstract**

Provided is a menu assembly method, comprising: determining whether a first card returns an active command response to a second card; generating an assembled menu after the menu of the second card is assembled into the menu data of the first card on a first temporary storage; storing the data of the assembled menu into a second temporary storage and sending the data of the assembled menu to a terminal. Also provided is a menu assembly system, comprising: a first determination module for determining whether the first card returns an active command response to the second card; a menu assembly module for generating the assembled menu after the menu of the second card is assembled into the menu data of the first card on the first temporary storage; and a second temporary storage for storing the data of the assembled menu and sending the data of the assembled menu to the terminal. Also provided is a terminal, comprising the aforementioned system. The technical solution of the embodiment of the present application achieves the assembling of the menus from two different chips, generating and displaying the assembled menu.

## Description

The present application claims the priority of a Chinese Patent Application No. 201010295763.5 filed to the State Intellectual Property Office of the People's Republic of China on September 28, 2010, the content of which is hereby incorporated by reference in its entirety.

### Field of the Invention

The present invention relates to the communication technology, and particularly, to a menu assembly method, a menu assembly system and a terminal.

### Background of the Invention

With the development of the communication technology, the functions of the (U) SIM card are increasingly extended. In which, the menu functions of the original (U) SIM card may be extended by increasing the interactive communications between a chip and the original (U) SIM card, so that the user can enjoy more services through using the menus integrated on the extended chip. But it is necessary to solve a problem of ensuring correct display of the assembled menus of the menus of the extended chip and the menus of the original (U) SIM card. For example, with respect to the SimPartner, the function is to attach one SimPartner to the original (U) SIM card, and it is required to assemble the menus of the SimPartner and the menus of the original (U) SIM card and display the assembled menus without influencing the usage of the menus of the original (U) SIM card, so that the functions provided by the SimPartner can be used through the added menus. For another example, with respect to other multi-chips, the user usually hopes to see an integrated menu rather than viewing the menus of various chips, respectively.

Since various types of (U) SIM cards are different from each other, the timings for them to establish the menus of the (U) SIM card during the start up process are uncertain, and it even cannot be determined whether there is any menu of the (U) SIM card. Regarding that case, a method is required to display menus that assembled the menus of the SimPartner when the menus of different types of (U) SIM cards are processed, or just display the menus of the SimPartner when there is no menu of the (U) SIM card, so as to complete the additional functions of the SimPartner.

In addition, when different chips are stacked together, the menus of two different types of chips also need to be assembled together, not limited to the aforementioned (U) SIM card and SimPartner.

In order to solve the above problem, a menu assembly method, a menu assembly system and a terminal are required to complete the menu assemblies for different types of (U) SIM cards (or other cards), and display the assembled menus of the SimPartner and the (U) SIM card (or two types of other chips).

### Summary of the Invention

The technical problem to be solved by the present invention is to provide a menu assembly method, a menu assembly system and a terminal, which assemble the menus of two different types of chips, generate and display the assembled menu.

For this purpose, the present invention provides a menu assembly method, comprising: determining whether a first card returns an active command response to a second card; generating an assembled menu after the menu of the second card is assembled into the menu data of the first card on a first temporary storage; and storing the data of the assembled menu into a second temporary storage and sending the data of the assembled menu to a terminal.

In the above technical solution, preferably, determining whether the first card returns an active command response to the second card specifically comprises: obtaining a return value of a processing command from the first card; and determining whether there is an active command response according to the return value.

In the above technical solution, preferably, sending a fetch instruction to the first card to fetch active command data, if it is determined that the first card returns an active command response to the second card.

In the above technical solution, preferably, determining whether the active command data is menu establishing command data; if so, obtaining the menu data of the first card and writing the menu data into the first temporary storage; and if not, storing the obtained active command data into the second temporary storage.

In the above technical solution, preferably, after storing the data of the assembled menu into the second temporary storage and sending the data of the assembled menu to the terminal, the method further comprises: setting a return status word and sending it to the terminal.

In the above technical solution, preferably, the first card is a (U) SIM card, and the second card is a SimPartner; the first temporary storage comprises a cache file and/or cache region; the second temporary storage comprises a cache file and/or cache region; and the first and second temporary storages may be the same as or different from each other.

Through the above technical solution, the following technical effect can be achieved: displaying the assembled menu at the terminal after the menu of the second card such as the SimPartner is assembled into the menu of the first card such as different types of subscriber identity modules.

The present invention further provides a menu assembly system, comprising: a first determination module configured to determine whether a first card returns an active command response to a second card; a menu assembly module configured to generate an assembled menu after the menu of the second card is assembled into the menu data of the first card on a first temporary storage; and a second temporary storage configured to store the data of the assembled menu and send the data of the assembled menu to a terminal.

In the above technical solution, preferably, the first determination module is configured to obtain a return value of a processing command from the first card, and determine whether there is an active command response according to the return value.

In the above technical solution, preferably, the menu assembly system further comprising: a second determination module configured to determine whether the active command data is menu establishing command data; if yes, obtain the menu data of the first card and write the menu data into the first temporary storage; and if not, store the obtained active command data into the second temporary storage.

In the above technical solution, preferably, the menu assembly system further comprising: a return status word setting unit configured to set a return status word.

In the above technical solution, preferably, the first card is a (U) SIM card, and the second card is a SimPartner; the first temporary storage comprises a cache file and/or cache region; the second temporary storage comprises a cache file and/or cache region; and the first and second temporary storages may be the same as or different from each other.

In the above technical solution, preferably, the carrier for the menu assembly system is a SimPartner, i.e. the second card is the SimPartner.

The present invention further provides a terminal, comprising the aforementioned menu assembly system.

In the above technical solution, preferably, the terminal comprises: cell phone, PDA, notebook computer and tablet PC.

According to the above technical solution, the correctly assembled menu can be displayed at the terminal after the menus of one or more second cards such as additional card (SimPartner) are assembled into menus of the first cards such as different types of subscriber identity modules, thereby completing the additional functions of the SimPartner.

### Brief Description of the Drawings

Fig. 1 is a flowchart of a menu assembly method according to an embodiment of the present invention;
Fig. 2 is a flowchart of a menu assembly method according to a preferred embodiment of the present invention;
Fig. 3 is a block diagram of a menu assembly system according to an embodiment of the present invention;
Fig. 4 is a block diagram of a terminal having a menu assembly system according to an embodiment of the present invention;
Fig. 5 is a flowchart of treating an active command during a menu assembly process according to a preferred embodiment of the present invention; and
Fig. 6 is a flowchart of treating a command processing notification during a menu assembly process according to an embodiment of the present invention.

### Detailed Description of the Preferred Embodiments

The present invention is further detailedly described as follows with reference to the drawings and the embodiments.

The following descriptions elaborate many details for the convenience of sufficiently understanding the present invention. However, the present invention can also be implemented in other ways different from the contents described herein. Therefore, the present invention is not limited to the embodiments disclosed as follows.

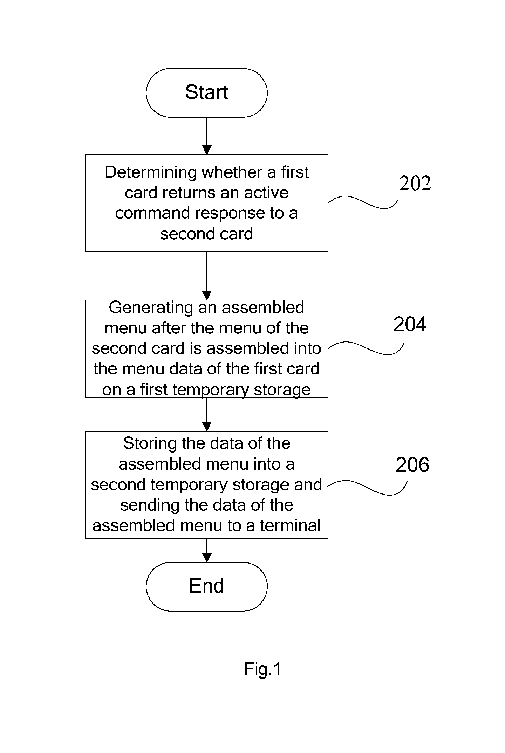

Fig. 1 is a flowchart of a menu assembly method according to an embodiment of the present invention.

The method includes: step 202: determining whether a first card returns an active command response to a second card; step 204: generating an assembled menu after the menu of the second card is assembled into the menu data of the first card on a first temporary storage; and step 206: storing the data of the assembled menu into a second temporary storage and sending the data of the assembled menu to a terminal.

In the above technical solution, preferably, step 202 specifically includes:
obtaining a return value of a processing command from the first card; and
determining whether there is an active command response according to the return value.

In the above technical solution, preferably, the method includes sending a fetch instruction to the first card to fetch active command data, if it is determined that the first card returns an active command response to the second card.

In the above technical solution, preferably, the method includes determining whether the active command data is menu establishing command data; if so, obtains the menu data of the first card and writes the menu data into the first temporary storage; and if not, stores the obtained active command data into the second temporary storage.

In the above technical solution, preferably, after the step of storingthe data of the assembled menu into the second temporary storage and sending the data of the assembled menu to the terminal, the method further includes: setting a return status word and sending it to the terminal.

In the above technical solution, preferably, the first card is a (U) SIM card, and the second card is a SimPartner. The first temporary storage includes a cache file and/or cache region. The second temporary storage includes a cache file and/or cache region. The first and second temporary storages may be the same as or different from each other.

Through using the above technical solution, the following technical effect can be achieved: displaying the assembled menu at the terminal after the menu of the second card such as the SimPartner is assembled into the menu of the first card such as different types of subscriber identity modules.

Although the above technical solution is described by taking the (U) SIM card and the SimPartner as an example, a person skilled in the art shall be appreciated that the present invention is adaptive to any occasion that requires assembling the menus of two types of different chips. For example, it is also adaptive to the multi-chip card. In addition, although this embodiment assembles the menu of one SimPartner into the menu of the (U) SIM card, the present invention is also adaptive to assemble the menus of multiple SimPartners into the menu of the (U) SIM card, the process of which is obvious for a person skilled in the art who has read the Specification.

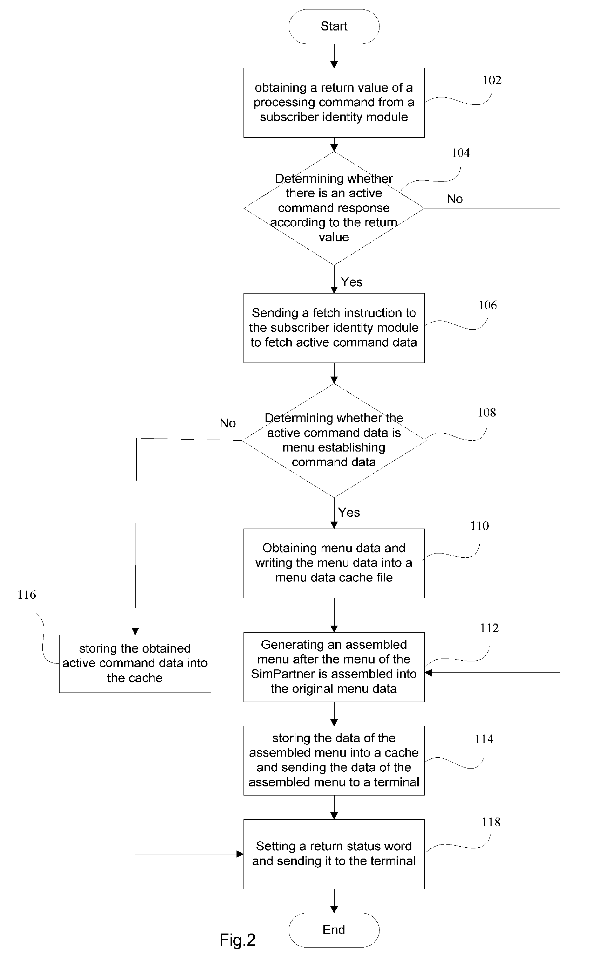

Fig. 2 is a flowchart of a menu assembly method according to a preferred embodiment of the present invention.

As illustrated in Fig. 2, the method includes: step 102: obtaining a return value of a processing command from a subscriber identity module; step 104: determining whether there is an active command response according to the return value, and if the result of determination is yes, proceeding to step 106; step 106: sending a fetch instruction to the subscriber identity module to fetch active command data; step 108: determining whether the active command data is menu establishing command data, and if the result of determination is yes, proceeding to step 110; step 110: obtaining menu data and writing the menu data into a menu data cache file; step 112: generating an assembled menu after the menu of the SimPartner is assembled into the original menu data; and step 114: storing the data of the assembled menu into a cache and sending the data of the assembled menu to a terminal.

In the above technical solution, preferably, when the result of determination is 'No' in step 104, proceeding to step 112.

In the above technical solution, preferably, when the result of determination is 'No' in step 108, proceeding to step 116: storing the obtained active command data into the cache.

In the above technical solution, preferably, after step 114 the method further includes step 118: setting a return status word and sending it to the terminal.

Herein a person skilled in the art shall be appreciated that Fig. 1 illustrates a preferred embodiment of the present invention, i.e., it can solve the technical problem of the present invention and complete a menu assembly, and Fig. 2 illustrates another preferred embodiment of the present invention, in which step 118 may constitute yet another preferred embodiment together with steps 110, 112 and 114 to complete menu assembly.

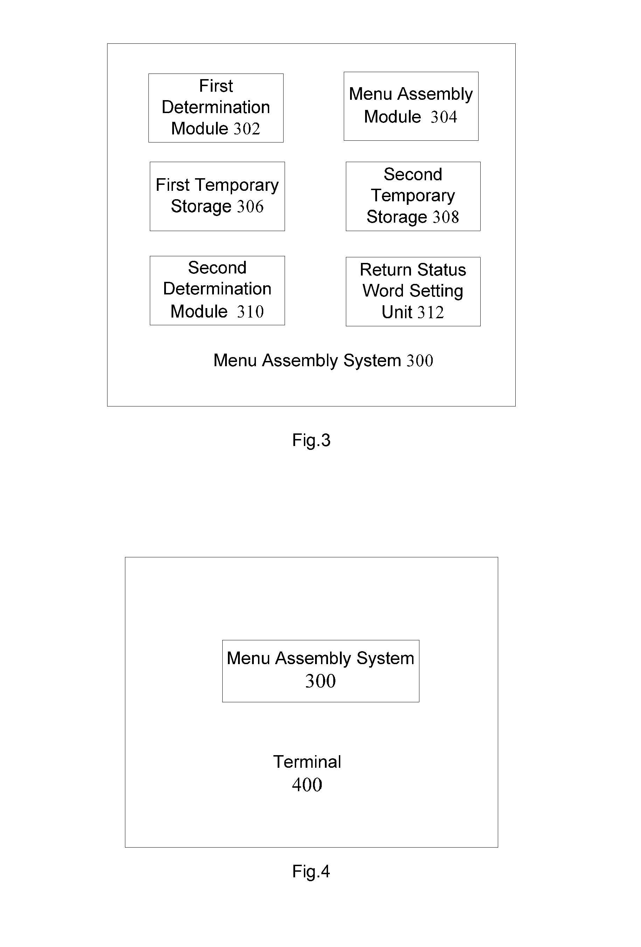

Fig. 3 is a block diagram of a menu assembly system according to an embodiment of the present invention.

The present invention further provides a menu assembly system 300, comprising: a first determination module 302 configured to determine whether a first card returns an active command response to a second card; a menu assembly module 304 configured to generate an assembled menu after the menu of the second card is assembled into the menu data of the first card on a first temporary storage 306; and a second temporary storage 308 configured to store the data of the assembled menu and send the data of the assembled menu to a terminal.

In the above technical solution, preferably, the first determination module 302 is configured to obtain a return value of a processing command from the first card, and determine whether there is an active command response according to the return value.

In the above technical solution, preferably, the menu assembly system 300 further includes:
a second determination module 310 configured to determine whether the active command data is menu establishing command data; if so, obtain the menu data of the first card and write the menu data into the first temporary storage; and if not, store the obtained active command data into the second temporary storage.

In the above technical solution, preferably, the menu assembly system 300 further includes: a return status word setting unit 312 configured to set a return status word.

In the above technical solution, preferably, the first card is a (U) SIM card, and the second card is a SimPartner. The first temporary storage includes a cache file and/or cache region. The second temporary storage includes a cache file and/or cache region. The first and second temporary storages may be the same as or different from each other.

In the above technical solution, preferably, the carrier for the menu assembly system is a SimPartner, i.e. the second card is the SimPartner. Thus, the carrier for the menu assembly system is the second card. That is, the SimPartner determines via the first determination module 302, whether an active command response returned by the first card is received; generate via the menu assembly module 304, an assembled menu after the menu of the SimPartner is assembled into the menu data of the first card on the first temporary storage 306; and store via the second temporary storage 308, the data of the assembled menu and send the data to the terminal.

According to the above technical solution, the correctly assembled menu can be displayed at the terminal after the menus of one or more second cards such as additional card (SimPartner) are assembled into menus of the first cards such as different types of subscriber identity modules, thereby completing the additional functions of the SimPartner.

Although the above technical solution is described by taking the (U) SIM card and the SimPartner as an example, a person skilled in the art shall be appreciated that the present invention is adaptive to any occasion that requires assembling the menus of two types of different chips. For example, it is also adaptive to the multi-chip card such as a Multi-Chip Module (MCM). In addition, although this embodiment assembles the menu of one SimPartner into the menu of the (U) SIM card, the present invention is also adaptive to assemble the menus of multiple SimPartners into the menu of the (U) SIM card, which is obvious for a person skilled in the art who has read the Specification.

Through the above technical solution, the following technical effect can be achieved: displaying the assembled menu at the terminal after the menu of the SimPartner is assembled into the menus of different types of subscriber identity modules.

Fig. 4 is a block diagram of a terminal having a menu assembly system according to an embodiment of the present invention.

As illustrated in Fig. 4, the embodiment of the present invention further provides a terminal 400 having the menu assembly system 300 as illustrated in Fig. 3. In the above technical solution, preferably, the terminal includes: cell phone, PDA, notebook computer, tablet PC and iPad.

Through the technical solution provided by the present invention, the correctly assembled menu can be displayed at the terminal. Thus for different types of subscriber identity modules, a assembled menu is generated after the menu of the SimPartner is assembled into the menu of the subscriber identity module, thereby completing the additional functions of the SimPartner, and bringing good operation experiences to the user.

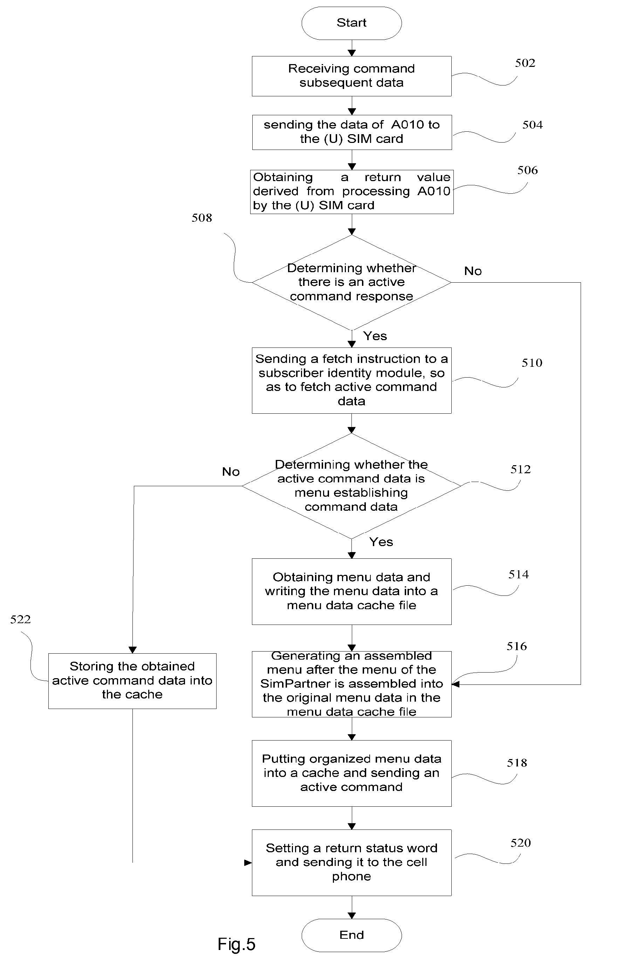

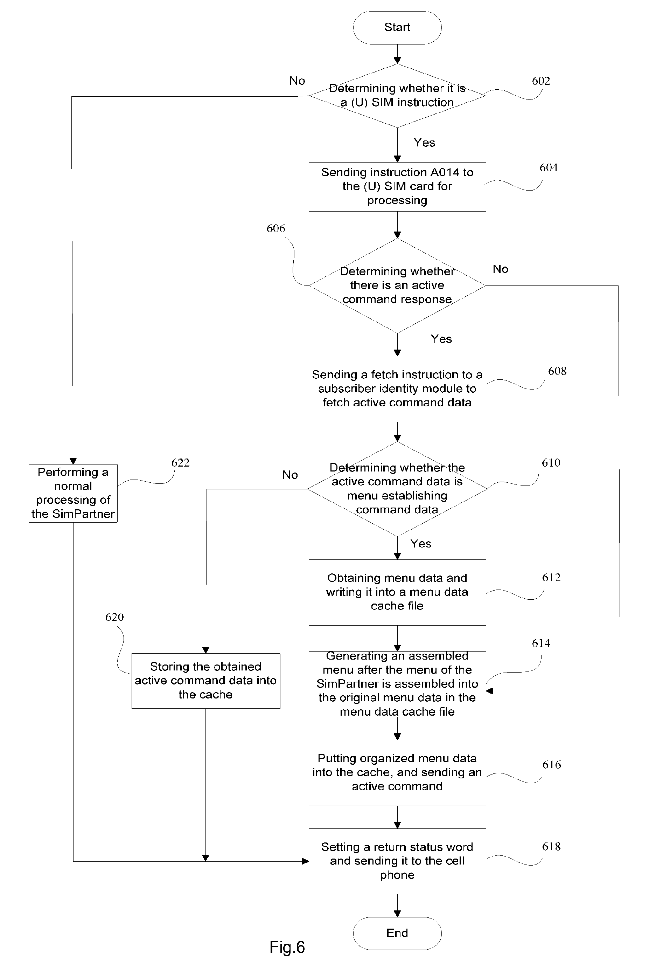

Fig. 5 is a flowchart of treating an active command during a menu assembly process according to a preferred embodiment of the present invention. Fig. 6 is a flowchart of treating a command processing notification during a menu assembly process according to an embodiment of the present invention.

As illustrated in Figs. 5 and 6, the technical solutions of the present invention are described herein with reference to the specific embodiments.

During the start up process of the cell phone, the flow of establishing the menu of the (U) SIM card is generally as follows:
During the start up process, the cell phone sends a Terminalprofile (A010) command to initiate the active command flow of the (U) SIM card. After receiving the command, the (U) SIM card returns an active command response according to its processing flow. According to the length of the response data, the cell phone sends a Fetch (A012) instruction to fetch the data of the active command for processing, and sends a command processing notification instruction TerminalResponse (A014) to the (U) SIM card. After receiving the command processing notification instruction, the (U) SIM card returns 9000 or continues to return an active command response according to its processing condition. If the (U) SIM card returns 9000, it indicates that the flow is ended. If the (U) SIM card continues to return an active command response, a new interaction flow is initiated. The active command includes various commands such as sending short message, providing local information, establishing menu, etc. Thus, during the active command interaction process, the (U) SIM card will initiate an active command for menu establishment at different timings.

The menu establishment timing for the (U) SIM card during the start up process generally includes two major conditions, i.e., the (U) SIM card sends no active command for menu establishment, and the (U) SIM card sends an active command for menu establishment. Under the above two conditions, there are several different menu establishment sequences, and the details are described as follows.

The (U) SIM card sends no active command for menu establishment
a) no active command is sent throughout the active command interaction flow of the start up, i.e., no active command is returned by (U) SIM card in response to the Terminalprofile (A010) which was sent by cell phone, and instead 9000 is returned directly.
b) an active command is sent throughout the active command interaction flow of the start up, but no active command for menu establishment is sent before the whole interaction command is ended.

The (U) SIM card sends an active command for menu establishment.
a) after the cell phone starts up to initiate an active command, the (U) SIM card makes active command responses, and the initial response is an active command for menu establishment;
b) after the cell phone starts up to initiate an active command, the (U) SIM card makes active command responses, but the initial active command response is not an active command for menu establishment, and an active command for menu establishment is sent after several active command interactions but before the end of the active command interactions.

With respect to the above conditions, all possible organizations of the menu of the (U) SIM card shall be considered to achieve the display of the assembled menu. Thus the treatment flows of the two instructions A010 and A014 shall be designed. The detailed steps are described as follows.

Referring to Fig. 5, it shows the flow of treating instruction Terminalprofile (A010).

In step 504: sending the data of the current instruction A010 to the (U) SIM card. In step 506: the SimPartner obtains a return value derived from processing A01 0 by the (U) SIM card. In step 508: determining whether there is an active command response; if so, entering step 510, and if the return value is 9000 (the active command flow is ended), entering step 516. In step 508, if the result of determination is an error message, entering step 520.

In step 510: according to the data length in the active command response, the SimPartner organizes a fetch (A012) instruction and sends it to the (U) SIM card, so as to fetch the data for an analysis. In step 512: determining whether the active command response is menu establishing command data; and if so, entering step 514, otherwise entering step 522 and then step 520.

In step 514: storing the fetched data into a menu cache file.

In step 516: carrying out a menu assembly through the data in the menu cache file (in case the menu cache is empty, only the menu of the SimPartner will be assembled).

In step 518: putting organized menu data into the cache, and sending an active command response to the cell phone according to the length of the assembled menu.

In step 520: setting a return status word and sending it to the cell phone.

In step 522: storing the obtained active command data into the cache.

Referring to Fig.6, it shows the flow of treating command processing notification instruction TerminalResponse (A014).

In step 602: determining whether the current command is required to send to the (U) SIM card according to the identifier, if so, entering step 604, otherwise entering step 622. wherein, this step specially may be as follows: when an active command is initiated, setting corresponding flag bit according to the initiation direction of the current command (initiated by the (U) SIM card or the SimPartner). In case of A014 responds, corresponding distribution is performed according to the setting of the previous identifier.

In step 604: sending the instruction A014 to the (U) SIM card for processing.

In step 606: determining whether there is an active command response, and if so entering step 608, otherwise entering step 614.

In step 608: sending a fetch instruction to the (U) SIM card to fetch active command data.

In step 610: determining whether the active command data is menu establishing command data, and if so, entering step 612, otherwise entering step 620.

In step 612: obtaining menu data and writing it into a menu data cache file.

In step 614: generating an assembled menu after the menu of the SimPartner is assembled into the original menu data in the menu data cache file.

In step 616: putting organized menu data into the cache, and sending an active command.

In step 618: setting a return status word and sending it to the cell phone.

In step 620: storing the obtained active command data into the cache and then entering step 618.

In step 622: performing a normal processing of the SimPartner and subsequently entering step 618.

The flow of assembling the menu of the SimPartner is described as above.

In this embodiment, the menu assembly method is applied to the cell phone, but the present invention is not limited thereto. A person skilled in the art shall be appreciated that the technical solution of the present invention can be used in other terminals, such as PDA, notebook computer, tablet PC, etc.

Referring to the detailed descriptions of Figs. 1 to 6, it is explicit to understand the menu assembly method and system provided by the present invention, as well as the terminal having the menu assembly system according to the present invention. The technical solutions of the present invention can extend the correct assembly between the menu of the chip and the menu of the original (U) SIM card, without influencing the menu of the original (U) SIM card. In addition, the various types of the original (U) SIM card are considered, and corresponding processing is made based on different conditions. Finally the menu of the original (U) SIM card and the menu of the SimPartner are assembled, so that the user can realize relevant applications by operating the menu. A person skilled in the art should be appreciated that although the Specification mainly takes SimPartner as an example, the present invention is adaptive to any occasion that requires assembling the menus. For example, it is also adaptive to the multi-chip card. In addition, although the embodiments assemble the menu of one SimPartner into the menu of the (U) SIM card, the present invention is also adaptive to assemble the menus of multiple SimPartners into the menu of the (U) SIM card, which is obvious for a person skilled in the art who has read the Specification.

The above descriptions are just preferred embodiments of the present invention, rather than limitations to the present invention. For a person skilled in the art, various modifications and changes may be made to the present invention. Any modification, equivalent substitution, improvement, etc. made within the spirit and rule of the present invention shall be incorporated within the protection scope of the present invention.

## Claims

1. A menu assembly method, comprising:
determining whether a first card returns an active command response to a second card;
generating an assembled menu after the menu of the second card is assembled into the menu data of the first card on a first temporary storage; and
storing the data of the assembled menu into a second temporary storage and sending the data of the assembled menu to a terminal.

2. The menu assembly method according to claim 1, wherein determining whether the first card returns an active command response to the second card specifically comprises:
obtaining a return value of a processing command from the first card; and
determining whether there is an active command response according to the return value.

3. The menu assembly method according to claim 1, wherein
sending a fetch instruction to the first card to fetch active command data, if it is determined that the first card returns an active command response to the second card.

4. The menu assembly method according to claim 3, wherein
determining whether the active command data is menu establishing command data;
if so, obtaining the menu data of the first card and writing the menu data into the first temporary storage; and
if not, storing the obtained active command data into the second temporary storage.

5. The menu assembly method according to any of claims 1 to 4, wherein after storing the data of the assembled menu into the second temporary storage and sending the data of the assembled menu to the terminal, the method further comprises: setting a return status word and sending it to the terminal.

6. The menu assembly method according to any of claims 1 to 4, wherein,
the first card is a (U) SIM card, and the second card is a SimPartner;
the first temporary storage comprises a cache file and/or cache region; the second temporary storage comprises a cache file and/or cache region; and the first and second temporary storages may be the same as or different from each other.

7. A menu assembly system, comprising:
a first determination module, configured to determine whether a first card returns an active command response to a second card;
a menu assembly module, configured to generate an assembled menu after the menu of the second card is assembled into the menu data of the first card on a first temporary storage; and
a second temporary storage, configured to store the data of the assembled menu and send the data of the assembled menu to a terminal.

8. The menu assembly system according to claim 7, wherein the first determination module is configured to obtain a return value of a processing command from the first card, and determine whether there is an active command response according to the return value.

9. The menu assembly system according to claim 7, further comprising:
a second determination module, configured to determine whether the active command data is menu establishing command data; if so, obtain the menu data of the first card and write the menu data into the first temporary storage; and if not, store the obtained active command data into the second temporary storage.

10. The menu assembly system according to any of claims 7 to 9, further comprising:
a return status word setting unit, configured to set a return status word.

11. The menu assembly system according to any of claims 7 to 9, wherein the first card is a SIM card, the second card is a SimPartner, the first temporary storage comprises a cache file and/or cache region, the second temporary storage comprises a cache file and/or cache region, and the first and second temporary storages may be the same as or different from each other.

12. The menu assembly system according to any of claims 7 to 9, wherein the carrier for the menu assembly system is a SimPartner, and the second card is the SimPartner.

13. A terminal, comprising the menu assembly system according to any of claims 7 to 11.
